# FASCICULE DE BREVET EUROPEEN

(11) **EP 1 241 764 B1**
(45) Date de publication et mention de la délivrance du brevet: **31.12.2014**
(21) Numéro de dépôt: 02290553.3
(22) Date de dépôt: 06.03.2002
(51) Int. Cl.: H02G 3/18

(54) **Ensemble comportant un socle et un mécanisme, entrant dans la composition d'un appareil électrique, et présentant des moyens d'encliquetage perfectionnés du mécanisme sur le socle**
Sockel- und Mechanismusanordnung für ein elektrisches Gerät mit verbesserten Schnappbefestigungsmitteln zwischen Sockel und Mechanismus
Assembly of a base and a mechanism for an electrical apparatus with improved snaplocking means between base and mechanism

(30) Priorité: 15.03.2001 FR 0103541
(43) Date de publication de la demande: 18.09.2002
(73) Titulaire: Legrand France, 87000 Limoges (FR); Legrand SNC, 87000 Limoges (FR)
(72) Inventeur: Desgranges, Nicolas, 87260 Pierre Buffiere (FR); Moresmau, Gérôme, 87220 Boisseuil (FR); Roumanie, Jean-Jack, 87170 Isle (FR)
(74) Mandataire: Santarelli

(56) Documents cités:
- DE-A- 1 690 086
- DE-U- 29 807 106

## Description

L'invention a trait au domaine des appareils électriques du type comportant un boîtier fixé sur une paroi, tel qu'une prise de courant, de téléphone, de télévision, ou encore un interrupteur.

L'invention concerne plus particulièrement un ensemble adapté à entrer dans la composition d'un tel appareil électrique, du type comportant un mécanisme et un socle formant support du mécanisme et destiné à être fixé à une paroi telle qu'une paroi murale.

Le mécanisme, par lequel transite le courant, constitue la partie active de l'appareil. Aussi, afin d'éviter toute défaillance de ce dernier, il est nécessaire d'assurer un positionnement ferme et précis du mécanisme par rapport au socle.

Il existe à ce jour diverses techniques pour assurer la fixation du mécanisme au socle.

Une première technique consiste à visser frontalement le mécanisme au socle. Cette technique donne entière satisfaction pour ce qui est de la rigidité de la fixation, mais elle nécessite de prévoir sur le socle des parties filetées qui s'avèrent fragiles lors de montages et démontages successifs d'un mécanisme. Par ailleurs, la fixation par vissage s'avère longue, ce qui rend fastidieuse l'installation d'une multitude d'appareils de ce type.

Une deuxième technique consiste à faire coulisser le mécanisme dans une rainure appropriée ménagée dans le socle, jusqu'à ce que soit réalisé un encliquetage maintenant le mécanisme dans une position donnée. Bien entendu, afin de permettre ce coulissement, il est nécessaire de prévoir un jeu entre le socle et le mécanisme au niveau de la rainure, qui résulte en un manque de rigidité de la fixation.

Une troisième technique consiste à encliqueter frontalement le mécanisme sur le socle par des moyens d'encliquetage appropriés. Cette technique s'avère plus simple et plus rapide que les deux précédentes.

Le document DE29807106 décrit un ensemble selon le préambule de la revendication 1.

L'invention concerne un ensemble comportant un mécanisme électrique et un socle comportant une paroi de fond formant support du mécanisme, ledit mécanisme étant apte à être maintenu par encliquetage sur ledit socle, ledit socle comportant des moyens d'encliquetage comportant un verrou élastiquement flexible qui comporte une portée d'appui en regard de ladite paroi de fond, ladite portée délimitant un logement dans lequel est apte à être engagée une patte dudit mécanisme.

Un ensemble de ce type est décrit dans le document FR-A 2 770 047.

Bien qu'il soit couramment employé, ce type d'ensemble présente un certain nombre d'inconvénients.

En effet, il arrive que les dimensions du mécanisme ne soient pas en correspondance parfaite avec celles du socle, en particulier au niveau de la patte du mécanisme, qui peut présenter des dimensions soit légèrement supérieures, soit légèrement inférieures aux dimensions du logement prévu dans le verrou.

Il en résulte que, d'une part, lors de l'encliquetage, il est nécessaire de forcer pour réaliser l'encliquetage, ce qui endommage à la fois la patte et le socle au niveau du verrou, et, d'autre part, lors du démontage du mécanisme, la patte a tendance à se coincer dans le logement, surtout lorsque celui-ci a été endommagé.

Il en résulte également que le positionnement du mécanisme par rapport au socle est imprécis et manque de rigidité.

L'invention vise notamment à palier les inconvénients précités, en proposant un ensemble socle/mécanisme qui, tout en bénéficiant des avantages pré-mentionnés de l'encliquetage, puisse être assemblé et démonté à la fois facilement et rapidement en un minimum d'opérations, qui permette, par le biais des moyens d'encliquetage, de vérifier la correspondance entre le mécanisme et le socle, et qui permette un positionnement précis du mécanisme sur le socle.

A cet effet, et selon un premier aspect, l'invention propose un ensemble comportant un mécanisme électrique et un socle comportant une paroi de fond formant support du mécanisme, ledit mécanisme étant apte à être maintenu par encliquetage sur ledit socle, ledit socle comportant des moyens d'encliquetage comportant un verrou élastiquement flexible qui comporte une portée d'appui en regard de ladite paroi de fond, ladite portée délimitant un logement dans lequel est apte à être engagée une patte dudit mécanisme, où ledit verrou comporte une dent étendue au moins partiellement dans ledit logement, et adaptée à être reçue dans un creux ménagé dans ladite patte.

Il existe donc une complémentarité de forme entre le verrou du socle et la patte du mécanisme. La dent forme un moyen embarqué sur le verrou, pour vérifier, lors de l'encliquetage, cette complémentarité de forme afin de permettre l'encliquetage et la tenue du mécanisme. Lorsque cette complémentarité de forme n'a pas été détectée, l'encliquetage s'avère impossible, ou la tenue du mécanisme insuffisante.

L'utilisateur est assuré de la bonne correspondance entre le socle et le mécanisme. La sécurité de l'installation électrique s'en trouve accrue.

La dent forme en outre un moyen pour guider la patte lors de l'encliquetage et assurer un maintien transversal de celle-ci en position encliquetée.

Le positionnement du mécanisme est donc plus précis.

Cette dent s'étend, au moins en partie, entre ladite portée d'appui et ladite paroi de fond, et elle présente par exemple une dimension d'élévation, dite hauteur, dont la valeur est supérieure à celle d'une dimension d'élévation, dite hauteur, dudit logement.

Selon un mode de réalisation, le verrou comporte deux crans de verrouillage espacés entre lesquels se trouve la dent, tandis que la patte du mécanisme comporte deux parties pleines espacées aptes à coopérer avec lesdits crans de verrouillage pour réaliser l'encliquetage du mécanisme, entre lesquelles parties pleines se trouve un creux complémentaire de la dent.

L'ensemble peut alors présenter les caractéristiques avantageuses mais non limitatives suivantes :
- les crans présentent chacun une face d'appui en regard de la paroi de fond, contre laquelle est apte à venir en appui une face dite supérieure prévue sur chacune des parties pleines de ladite patte, lesdites faces d'appui et lesdites faces supérieures étant coplanaires deux à deux, lesdites faces d'appui formant ensemble ladite portée d'appui, et ladite dent présente une face, dite supérieure, tournée vers l'opposé desdites faces d'appui, tandis que ledit creux présente une face, dite inférieure, tournée vers l'opposé desdites faces supérieures et apte à venir en appui sur la face supérieure de ladite dent en position encliquetée du mécanisme ;
- la face supérieure de la dent est parallèle aux faces d'appui desdits crans, tandis que la face inférieure dudit creux est parallèle aux faces supérieures desdites parties pleines ;
- une partie au moins de la face supérieure de la dent est inclinée par rapport aux faces d'appui desdits crans, tandis que la face inférieure dudit creux est, au moins en partie, inclinée par rapport aux faces supérieures desdites parties pleines pour coopérer avec la face supérieure de la dent ;
- une partie au moins de la face supérieure de la dent se trouve au-delà des faces d'appui desdits crans, vers l'opposé de ladite paroi de fond, tandis qu'une partie au moins de la face inférieure dudit creux se trouve au-delà et en regard des faces supérieures desdites parties pleines ;
- il est prévu, sur le verrou, un espace vide entre les crans au droit de la dent, cet espace vide débouchant du côté opposé à la paroi de fond ;
- la dent est centrée transversalement par rapport à cet espace vide, et présente une dimension transversale dont la valeur est inférieure à celle d'une dimension transversale dudit espace vide, tandis que la patte dudit mécanisme comporte deux cloisons encadrant ledit creux et séparant celui-ci desdites parties pleines, chaque cloison se trouvant, en position encliquetée du mécanisme, entre la dent et l'un des crans ;
- chacune de ces cloisons est prolongée, du côté opposé audit creux, par une nervure de renfort de la patte.
- il est prévu un interstice entre la patte et le verrou en position encliquetée du mécanisme, cet interstice débouchant du côté opposé à ladite paroi de fond et formant, au travers dudit espace vide, un passage accessible pour un outil apte à écarter le verrou de la patte pour dégager celle-ci de la portée d'appui, en vue de séparer du socle le mécanisme préalablement encliqueté ;
- le verrou comporte un pion, en saillie suivant une direction dite d'élévation, qui borde ledit espace vide pour former une surface d'appui pour l'outil.
- chaque cran présente, du côté opposé à sa face d'appui, une surface courbe sur laquelle est apte à appuyer et glisser, lors de l'encliquetage du mécanisme, un chanfrein pratiqué dans chacune desdites parties pleines, en vue d'écarter le verrou de la patte pour permettre l'encliquetage du mécanisme sur le socle ;
- ledit creux présente, du côté d'une face d'extrémité libre de la patte, un chanfrein apte à permettre l'engagement de la patte du mécanisme dans le verrou suivant une direction oblique.

Selon un mode de réalisation, le verrou présente deux faces inclinées, contre lesquelles est apte à appuyer et glisser, lors de l'encliquetage du mécanisme, la patte de celui-ci, ces faces inclinées étant propres à assurer le guidage et le positionnement de la patte par rapport au verrou, suivant la direction transversale.

Par exemple, le verrou présente, de part et d'autre de la portée d'appui, deux branches en saillie, chanfreinées du côté opposé à la paroi de fond pour former lesdites faces inclinées.

Selon un mode de réalisation, le socle comporte une languette flexible saillant de la paroi de fond en direction du verrou, sur laquelle est apte à venir en appui la patte du mécanisme, cette languette formant un ressort apte à solliciter la patte du mécanisme pour l'éloigner de la paroi de fond.

Selon un deuxième aspect, l'invention propose un socle adapté à entrer dans la composition d'un ensemble tel que décrit ci-dessus, ledit socle comportant une paroi de fond formant support d'un mécanisme électrique adapté à entrer dans la composition du même ensemble, ainsi que des moyens d'encliquetage comportant un verrou élastiquement déformable en flexion suivant une direction dite longitudinale, et qui comporte une portée d'appui en regard de ladite paroi de fond, ladite portée d'appui délimitant un logement apte à recevoir une patte dudit mécanisme, ledit verrou comportant une dent en saillie, étendue au moins partiellement dans ledit logement.

Cette dent se trouve au moins partiellement étendue entre la portée d'appui et la paroi de fond, et elle peut présenter une dimension d'élévation, dite hauteur, dont la valeur est supérieure à celle d'une dimension d'élévation, dite hauteur, dudit logement.

Selon un mode de réalisation, ce verrou comporte deux crans de verrouillage espacés entre lesquels se trouve ladite dent.

Le socle peut présenter les caractéristiques avantageuses mais non limitatives suivantes :
- les crans présentent chacun une face d'appui en regard de la paroi de fond, ces faces d'appui étant coplanaires et formant ensemble ladite portée d'appui, tandis que la dent présente une face, dite supérieure, tournée vers l'opposé de ces surfaces d'appui ;
- la face supérieure de la dent est parallèle aux faces d'appui desdits crans ;
- une partie au moins de la face supérieure de ladite dent est inclinée par rapport aux faces d'appui desdits crans ;
- une partie au moins de la face supérieure de la dent se trouve au-delà des faces d'appui desdits crans, vers l'opposé de la paroi de fond ;
- il est prévu, sur le verrou, un espace vide entre les crans au droit de la dent, cet espace vide débouchant du côté opposé à la paroi de fond ;
- la dent est centrée transversalement par rapport à cet espace vide, et présente une dimension transversale dont la valeur est inférieure à celle d'une dimension transversale de l'espace vide ;
- le verrou comporte un pion, en saillie suivant une direction dite d'élévation, bordant cet espace vide ;
- chaque cran présente, du côté opposé à sa face d'appui, une surface courbe ;
- le verrou présente, de part et d'autre de ladite portée d'appui, deux branches en saillie, chanfreinées du côté opposé à la paroi de fond.

En outre, le socle peut comprendre une languette élastiquement flexible, saillant de la paroi de fond en direction du verrou, cette languette présentant une face, dite supérieure qui, en l'absence de sollicitation, est inclinée par rapport à la paroi de fond.

Par ailleurs, le verrou se présente par exemple sous la forme d'une poutre, étendue suivant une direction dite transversale perpendiculaire à la direction longitudinale, et qui comporte un corps flottant par rapport à ladite paroi de fond, ce corps portant ladite portée d'appui et étant terminé par deux parties extrêmes rigidement ancrées dans la paroi de fond.

Le socle peut présenter les caractéristiques avantageuses mais non limitatives suivantes :
- la poutre est déformable, de manière élastique, en flexion suivant la direction longitudinale, et en torsion autour d'un axe parallèle à la direction transversale ;
- le verrou est en saillie par rapport à la paroi de fond, et le socle présente un congé de raccordement entre la paroi de fond et les parties extrêmes du verrou ;
- ces parties extrêmes sont inclinées par rapport au corps de verrou, en étant recourbées du côté du verrou où se trouve la portée d'appui ;
- ces parties extrêmes sont biseautées vers la paroi de fond.

En outre, le socle peut présenter une découpe pratiquée dans la paroi de fond, formant un espace vide autour dudit corps de verrou.

Selon un troisième aspect, l'invention propose un mécanisme électrique adapté à entrer dans la composition d'un ensemble tel que décrit ci-dessus, apte à être maintenu par encliquetage sur un socle adapté à entrer dans la composition du même ensemble, ledit mécanisme comportant à cet effet une patte en saillie, apte à coopérer avec des moyens d'encliquetage appartenant audit socle, cette patte comprenant deux parties pleines espacées, séparées par un creux ménagé dans la patte.

Ce mécanisme peut présenter les caractéristiques avantageuses mais non limitatives suivantes :
- chaque partie pleine présente une face, dite supérieure, lesdites faces supérieures étant coplanaires, tandis que ledit creux présente une face, dite inférieure, tournée vers l'opposé de ces faces supérieures ;
- la face inférieure dudit creux est parallèle aux faces supérieures des parties pleines ;
- une partie au moins de la face inférieure dudit creux est inclinée par rapport aux faces supérieures desdites parties pleines ;
- une partie au moins de la face inférieure dudit creux se trouve au-delà et en regard des faces supérieures desdites parties pleines ;
- la patte comporte deux cloisons encadrant ledit creux et séparant celui-ci desdites parties pleines ;
- chaque cloison est prolongée, du côté opposé audit creux, par une nervure de renfort de ladite patte ;
- chaque partie pleine est chanfreinée du côté d'une face d'extrémité libre de ladite patte ;
- ledit creux est chanfreiné du côté d'une face d'extrémité libre de la patte.

Selon un quatrième aspect, l'invention propose un appareil électrique du type comportant un socle pour sa fixation à une paroi, un mécanisme électrique apte à être encliqueté sur le socle qui forme un support dudit mécanisme, ainsi qu'une coiffe apte à recouvrir le socle et le mécanisme pour former une façade d'utilisation de l'appareil, où ledit socle et ledit mécanisme forment un ensemble tel que décrit ci-dessus.

D'autres caractéristiques et avantages de l'invention apparaîtront à la lumière de la description qui va suivre de modes de réalisation donnés à titre d'exemples non limitatifs, description faite en référence aux dessins annexés dans lesquels :
- la figure 1 est une vue en perspective éclatée d'un appareil électrique selon l'invention ;
- la figure 2 est une vue en perspective éclatée d'un ensemble comportant un mécanisme et un socle, et entrant dans la composition d'un appareil électrique tel que représenté sur la figure 1 ;
- la figure 3 est une vue en plan de dessus du socle selon l'invention, représenté sur la figure 2 ;
- la figure 4 est une vue en perspective du socle selon un détail IV de la figure 2 ;
- la figure 5 est une vue en perspective de détail du socle illustrant les moyens d'encliquetage du mécanisme ;
- la figure 6 est une vue en coupe d'élévation transversale suivant la ligne de coupe VI - VI de la figure 5 ;
- la figure 7 est une vue de détail en perspective illustrant le socle et le mécanisme dans une position préalable à l'encliquetage ;
- la figure 8 est une vue de détail en coupe d'élévation longitudinale suivant le plan de coupe VIII - VIII de la figure 7, dans une position préalable à l'encliquetage, où le mécanisme est globalement incliné par rapport au socle ;
- la figure 9 est une vue de détail en coupe similaire à la figure 8, en position encliquetée du mécanisme sur le socle ;
- la figure 10 est une vue de détail en coupe similaire à la figure 9, où seul le socle est représenté ;
- la figure 11 est une vue de détail en perspective similaire à la figure 11, selon une variante de réalisation ;
- la figure 12 est une vue de détail en plan de dessus illustrant le socle et le mécanisme en position encliquetée de ce dernier ;
- la figure 13 est une vue de détail en coupe d'élévation longitudinale selon le plan de coupe XIII-XIII de la figure 12 ;
- la figure 14 est une vue de détail en perspective illustrant une patte du mécanisme selon une variante de réalisation ; et
- la figure 15 est une vue similaire à la figure 14, selon une autre variante de réalisation.

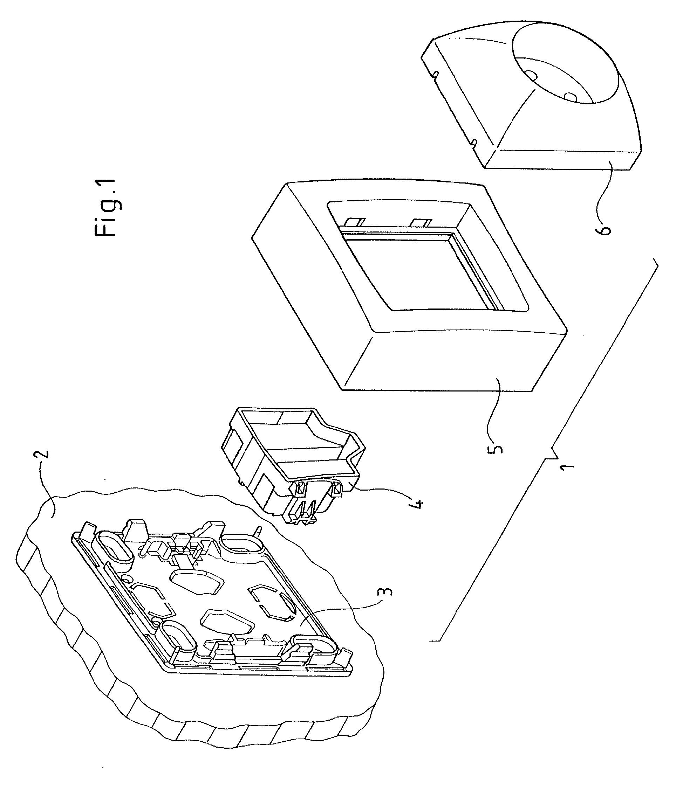

Sur la figure 1 est représenté un appareil électrique 1, en l'occurrence une prise électrique destinée à être fixée sur une paroi 2 telle qu'une paroi murale. Cet appareil 1 comprend un socle 3 destiné à être fixé sur la paroi 2, un mécanisme 4 formant la partie électrique active de l'appareil 1, un cadre 5 destiné à être rapporté sur le socle 3, notamment par encliquetage, ainsi qu'une coiffe 6 destinée à recouvrir le tout pour former une façade accessible aux utilisateurs de l'appareil 1.

Le cadre 5 et la coiffe 6 étant ici des éléments de type conventionnel, ils ne seront pas décrits en détail.

L'on décrit à présent l'ensemble 7 composé du socle 3 et du mécanisme 4.

Le socle 3 se présente sous la forme d'une platine à base carrée comportant une paroi de fond 8 sensiblement plane bordée par un cadre 9 délimitant le socle 3.

Pour des raisons de commodité, le socle 3 est décrit dans une position où il repose à plat, sa paroi de fond 8 étant étendue de manière sensiblement horizontale.

Encore pour des raisons de commodité, on définit le centre géométrique du socle 3 par l'intersection des diagonales de son cadre 9. Une localisation à proximité du centre du socle 3 sera dite intérieure, tandis qu'une localisation à distance du centre sera dite extérieure.

Par ailleurs, on définit arbitrairement un repère orthogonal direct, lié au socle 3, par trois directions orthogonales deux à deux, à savoir une direction dite longitudinale L sensiblement parallèle à un bord du cadre 9, une direction dite transversale T perpendiculaire à la direction longitudinale L et sensiblement parallèle à la paroi de fond 8, ainsi qu'une direction d'élévation E sensiblement perpendiculaire à la paroi de fond 8. Les termes "inférieur" et "supérieur" sont définis par rapport à la direction d'élévation E.

Dans la suite, on entend par « longueur », « largeur » et « hauteur » d'une pièce ou d'un élément, ses dimensions ou encombrements, respectivement suivant les directions longitudinale, transversale, d'élévation.

La paroi de fond 8 présente une première face 10, dite inférieure, destinée à être disposée en regard de la paroi 2 sur laquelle est destiné à être fixé le socle 3, ainsi qu'une deuxième face 11, dite supérieure, opposée à la première 10, du côté de laquelle se trouvent le mécanisme 4 et les autres constituants de l'appareil 1.

Dans chaque coin du cadre 9 sont pratiqués des trous oblongs 12 pour le passage de vis de fixation du socle 3 à la paroi 2.

Tout ce qui va être décrit à présent se trouve du côté supérieur du socle 3, c'est-à-dire du côté de la face supérieure 11 de sa paroi de fond 8.

Le socle 3 présente, au droit de la paroi de fond 8, une zone de réception 13 dans laquelle est apte à être disposé le mécanisme 4, bordée par des moyens d'encliquetage 14 de celui-ci.

Ces moyens d'encliquetage 14 comprennent deux verrous 15 en regard, qui se présentent sous la forme de pattes étendues transversalement et saillant de la paroi de fond 8 avec laquelle elles sont venues de matière.

Le mécanisme 4 comprend quant à lui un corps principal 16, ainsi que deux pattes 17 saillant du corps principal 16 et dont chacune est apte à coopérer avec un verrou 15 pour réaliser l'encliquetage du mécanisme 4 sur le socle 3.

Chaque verrou 15 présente une symétrie plane par rapport à un plan P d'élévation longitudinale, et l'on définit un axe A du verrou 15 par un axe situé dans le plan de symétrie P de celui-ci, et parallèle à la direction longitudinale.

Chaque patte 17 du mécanisme 4 présente également une symétrie plane par rapport à un plan P' qui, en position encliquetée du mécanisme 4, se trouve en élévation longitudinale confondu avec le plan P, et l'on définit un axe A' de la patte 17 par un axe contenu dans ce plan de symétrie P', et qui, en position encliquetée du mécanisme 4, est parallèle à la direction longitudinale L et se trouve confondu avec l'axe A du verrou 15.

Le mécanisme 4 peut être encliqueté sur le socle 3 suivant une direction, dite d'encliquetage, parallèle à la direction d'élévation E.

Le verrou 15 est apte à être déformé de manière élastique sous l'effet d'une contrainte ayant une composante longitudinale dirigée vers l'extérieur du socle 3.

En l'absence de sollicitation, le verrou 15 est étendu globalement en élévation, sensiblement perpendiculairement à la paroi de fond 8.

Le verrou 15 comporte, en regard et à une certaine distance de la face supérieure 11 de la paroi de fond 8, une portée d'appui 18. En position encliquetée du mécanisme 4, la patte 17 de celui-ci se trouve engagée entre cette portée 18 et la paroi de fond 8, dans un logement 19 délimité par la portée 18.

Suivant l'invention, le verrou 15 comporte une dent 20 étendue au moins partiellement dans le logement 19. Cette dent saille du verrou 15 vers l'intérieur du socle 3. Elle sera décrite ci-après plus en détail.

Selon un mode de réalisation illustré sur les figures, le verrou 15 comporte deux crans de verrouillage 22, 23 espacés, séparés par une encoche 24 formant entre les crans 22, 23 un espace vide 24' débouchant du côté opposé à la paroi de fond 8.

La patte 17 du mécanisme 4 comporte quant à elle deux parties pleines 25, 26 espacées, aptes à coopérer avec les crans de verrouillage 22, 23 de manière à réaliser l'encliquetage du mécanisme 4.

Les crans 22, 23 présentent chacun une face d'appui 27 en regard de la paroi de fond 8, sensiblement parallèle à celle-ci, et contre laquelle est apte à venir s'appliquer une face dite supérieure 28 prévue sur chacune des parties pleines 25, 26 du mécanisme 4. Les faces d'appui 27 des crans 22, 23 et les faces supérieures 28 des parties pleines 25, 26 sont respectivement coplanaires deux à deux. Les faces d'appui 27 forment ensemble la portée d'appui 18 et délimitent le logement 19 vers le haut.

Les crans 22, 23 présentent également chacun une face de butée 29 étendue suivant un plan d'élévation transversale, sensiblement perpendiculaire à la face d'appui 27, et contre laquelle est apte à venir en appui une face d'extrémité 30 de la patte au droit de chaque partie pleine 25, 26, en position encliquetée du mécanisme 4. Ces faces de butée 29, qui sont coplanaires, délimitent le logement 19 vers l'extérieur du socle 3.

Par ailleurs, afin de faciliter l'encliquetage du mécanisme 4, chaque cran 22, 23 présente, du côté opposé à sa face d'appui 27, une surface courbe 31 sur laquelle est apte à appuyer et glisser, lors de l'encliquetage, un chanfrein 32 pratiqué sur chaque partie pleine 25, 26, adjacent à la face d'extrémité 30 de la patte 17, en vue d'écarter le verrou 15 de la patte 17, vers l'extérieur, sous la pression du mécanisme 4.

En outre, les crans 22, 23 présentent chacun une face d'extrémité 33 ou, suivant les réalisations, une arête d'extrémité, qui prolonge la surface courbe 31, et qui se trouve dans un plan d'élévation transversale délimitant le logement 19 vers l'intérieur du socle 3.

On note respectivement a et c, la longueur et la hauteur du logement 19 ainsi défini.

Les crans 22, 23 présentent deux faces parallèles 34, 35 en regard, étendues suivant un plan d'élévation longitudinale, qui bordent l'encoche 24 transversalement en formant ses faces latérales. L'encoche 24 est bordée longitudinalement, vers l'extérieur, par une face transversale 36 reliant les faces latérales 34, 35, de sorte que l'encoche 24 présente une section en forme de U suivant un plan contenant les directions longitudinale L et transversale T.

La dent 20 se trouve entre les crans 22, 23, au droit de l'encoche 24. L'on note b la largeur de l'encoche 24, c'est-à-dire la distance séparant ses faces latérales 34, 35.

La dent 20, située du même côté que la portée 18 vers l'intérieur du socle 3, présente une face supérieure 37 tournée vers l'opposé des faces d'appui 27 des crans de verrouillage 22, 23, ainsi qu'une face inférieure 38 opposée. La dent 20 est bordée transversalement par deux faces 39, 40 dites latérales étendues suivant un plan d'élévation longitudinale. La dent 20 est terminée vers l'intérieur du socle 3 par une face d'extrémité 41 étendue suivant un plan d'élévation transversale.

L'on note a', b', c' la longueur, la largeur et la hauteur de la dent 20, c'est-à-dire les distances séparant, respectivement, la face transversale 36 de l'encoche 24 de la face d'extrémité 41, la face latérales 39 de la face latérale 40, la face supérieure 37 de la face inférieure 38.

Entre les parties pleines 25, 26 de la patte 17 est ménagé un creux 42 complémentaire de la dent 20, et dans lequel est apte à être reçue cette dernière en position encliquetée du mécanisme 4, tandis que les parties pleines 25, 26 viennent se loger sous les crans 22, 23 en encadrant la dent 20. Ce creux 42 est complémentaire de la dent 20.

De la sorte, le verrou 15 et la patte 17 présentent une complémentarité de forme. La dent 20 forme un moyen pour détecter cette complémentarité de forme lors de l'encliquetage du mécanisme 4.

En effet, si l'on essaie d'encliqueter une patte de mécanisme dépourvue de creux en regard de la dent 20, la face d'extrémité de la patte vient buter contre la face d'extrémité 41 de la dent 20 et maintient le verrou 15 en position écartée, rendant donc impossible l'encliquetage du mécanisme portant ce type de patte.

Par ailleurs, la dent 20 forme un moyen de guidage et de positionnement de la patte 17. A cet effet, la patte présente deux faces 43, 44, dites latérales, en regard, bordant le creux 42, étendues suivant un plan d'élévation longitudinale lorsque le mécanisme 4 est en position encliquetée sur le socle 3, et qui forment des moyens de butée transversale 21 venant s'appliquer contre les faces latérales 34, 35 de la dent 20.

En outre, le creux 42 présente ici une face 45, dite inférieure, tournée vers l'opposé des faces supérieures 28 des parties pleines 25, 26. Cette face inférieure 45, ici parallèle aux faces supérieures 28 des parties pleines 25, 26, est apte à venir s'appliquer contre la face supérieure 37 de la dent 20 pour recouvrir au moins en partie cette dernière, en position encliquetée du mécanisme 4.

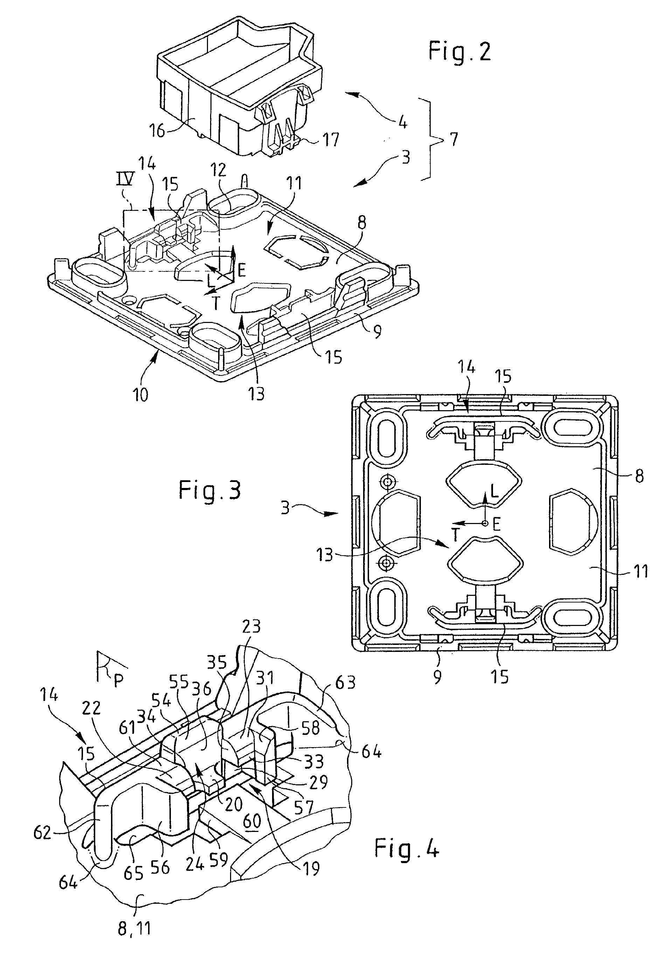

Selon un mode de réalisation illustré sur la figure 4, la dent 20 se présente sous la forme d'une languette de forme sensiblement parallélépipédique, ses faces inférieure 38 et supérieure 37 étant sensiblement parallèles entre elles et à la face d'appui 27 des crans 22, 23.

La face inférieure 45 du creux 42 est quant à elle parallèle aux faces supérieures 37 des parties pleines 25, 26 pour venir coopérer intimement avec la face supérieure 37 de la dent 20.

Selon un mode de réalisation illustré sur les figures 4 à 6, la dent 20 est centrée transversalement par rapport à l'encoche 24, et la largeur b' de la dent 20 est inférieure à la largeur b de l'encoche 24, de sorte que deux passages 46, 47 sont ménagés entre les faces latérales 39, 40 de la dent 20 et les faces latérales 34, 35 de l'encoche 24.

La patte 17 du mécanisme 4 comporte quant à elle deux cloisons 48, 49 encadrant le creux 42 et la séparant des parties pleines 25, 26. Ces cloisons 48, 49 viennent se loger dans les passages 46, 47, en position encliquetée du mécanisme 4, celui-ci se trouvant alors positionné transversalement en étant centré par rapport au verrou 15.

Par ailleurs, chaque cloison 48, 49 est ici prolongée, du côté opposé au creux 42, par une nervure 50, 51. Ces nervures 50, 51, qui forment un renfort de la patte 17, viennent se loger dans l'encoche 24 en position encliquetée du mécanisme 4.

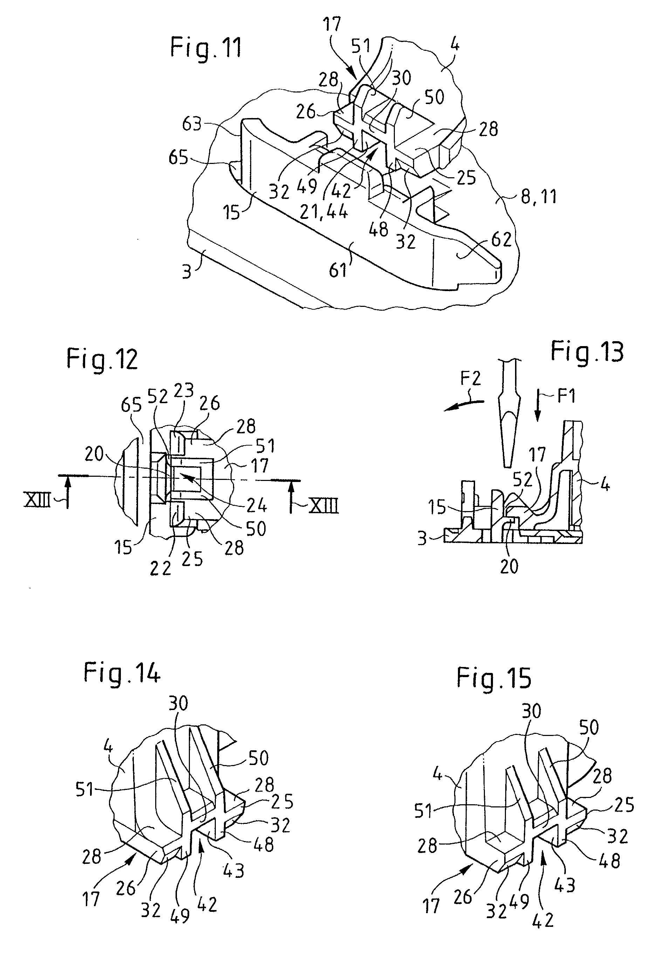

Trois variantes de réalisation de ces nervures 50, 51, qui correspondent à différentes formes de pattes 17 de mécanisme 4, sont représentées respectivement sur les figures 11,14 et 15.

La longueur a' et la hauteur c' de la dent 20 sont, quant à elles, ici respectivement égale (ou sensiblement égale) à la longueur a et inférieure à la hauteur c du logement 19, la face supérieure 37 de la dent 20 étant sensiblement coplanaire avec les faces d'appui 27 des crans 22, 23.

Selon un mode de réalisation illustré sur les figures 12 et 13, il est prévu au droit de l'encoche 24 un interstice 52 entre la face transversale 36 de l'encoche 24 et la face d'extrémité 30 de la patte 17, en position encliquetée dudit mécanisme 4.

Cet interstice 52 débouche à l'opposé de la paroi de fond 8 et forme, au travers de l'encoche 24, un passage accessible du côté de la face supérieure 11 de la paroi de fond 8, pour un outil 53 tel qu'un tournevis, utilisé pour écarter le verrou 15 de la patte 17 et dégager celle-ci de la portée d'appui 18 en vue de séparer du socle 3 le mécanisme 4 préalablement encliqueté.

Afin de faciliter la manipulation de l'outil 53, le verrou 15 comporte un pion 54, en saillie suivant la direction d'élévation E, qui borde l'encoche 24 vers l'extérieur et forme une surface d'appui 55 pour l'outil 53 qui, employé comme un levier, pivote autour de cette surface d'appui 55 et, prenant également appui sur la patte 17, écarte le verrou 15 de celle-ci.

Ainsi, pour séparer le mécanisme 4 du socle 3, il est procédé en deux étapes :
- introduction, suivant la direction E d'élévation et dans un sens matérialisé par la flèche F1 de la figure 13, du côté de la face supérieure 11 de la paroi de fond 8 du socle 3, d'une extrémité de l'outil dans l'interstice 52 entre le verrou 15 et la patte 17, cette extrémité présentant des dimensions inférieures à celles de l'interstice 52, et
- pivotement de l'outil 53 autour du pion 54 (ce pivotement est matérialisé par la flèche F2 de la figure 13).

La face supérieure 37 de la dent 20 forme une butée pour l'extrémité de l'outil 53 engagée dans l'interstice 52, de sorte que, d'une part, l'outil 53 ne traverse pas le socle 3, ce qui préserve la paroi 2 sur laquelle est fixé le socle 3 et évite les risques de contact avec un câble électrique se trouvant derrière le socle 3 et, d'autre part, l'outil 53 se trouve positionné en élévation par rapport au socle 3 et au mécanisme 4, de manière optimale pour former levier.

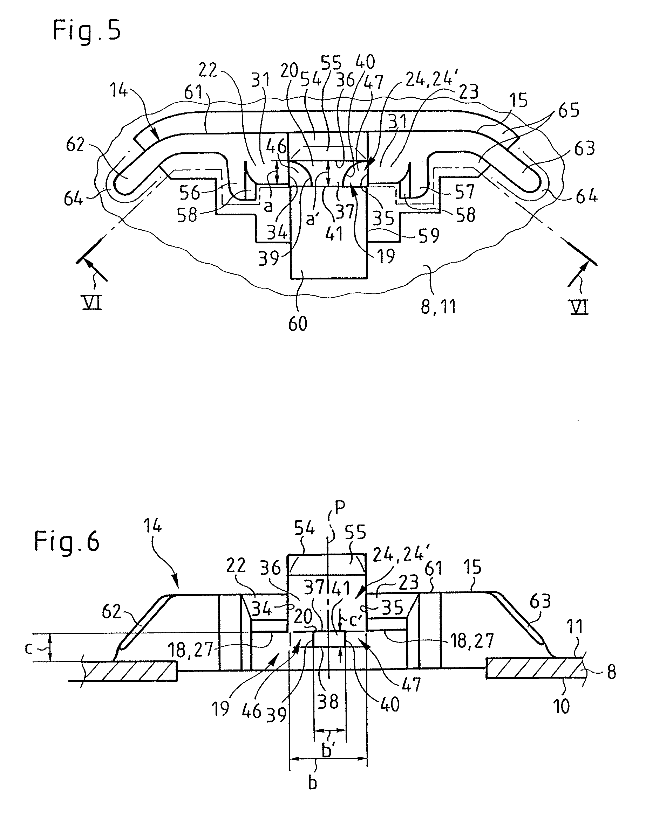

Par ailleurs, selon un mode de réalisation illustré sur les figures 4 et 5 notamment, le verrou 15 comprend deux branches 56, 57 en saillie, du même côté que la portée 18, et qui encadrent celle-ci transversalement.

A des fins de compacité, les branches 56, 57 jouxtent les crans 22, 23. Chaque branche 56, 57 s'étend longitudinalement au-delà du cran 22, 23 qu'elle jouxte, et présente dans sa partie supérieure, un chanfrein 58 formant une surface inclinée contre laquelle est apte à appuyer et glisser la patte 17 lors de l'encliquetage du mécanisme 4. Les chanfreins 58 sont propres à assurer ensemble le guidage et le positionnement transversal de la patte 17 par rapport au verrou 15 lors de l'encliquetage du mécanisme 4.

Par ailleurs, selon un mode de réalisation illustré sur la figure 4, le socle 3 comporte, dans la zone de réception 13, une languette 59 flexible saillant de la paroi de fond 8 en direction du verrou 15, sur laquelle est apte à venir en appui la patte 17 du mécanisme 4.

Cette languette 59 forme un ressort apte à solliciter la patte 17 pour l'éloigner de la paroi de fond 8 afin, premièrement, de plaquer la face supérieure 28 de la patte 17 contre la face d'appui 27 des crans 22, 23 et ainsi rattraper les jeux suivant la direction d'élévation E, et, deuxièmement, de provoquer l'éjection du mécanisme 4 lors de sa séparation du socle 3. A cet effet, la languette 59 présente une face supérieure 60 située dans le prolongement de la face supérieure 11 de la paroi de fond 8 et inclinée par rapport à celle-ci en direction de la portée 18.

Selon un mode de réalisation illustré sur les figures 4 à 6 notamment, le verrou 15 se présente sous la forme d'une poutre étendue suivant la direction transversale T, et qui comporte un corps 61 flottant par rapport à la paroi de fond 8, qui porte la portée 18 et les branches 56, 57 précédemment décrites, et dans lequel est pratiquée l'encoche 24. Le corps 61 est terminé de part et d'autre suivant la direction transversale T, par deux parties extrêmes 62, 63 rigidement ancrées dans la paroi de fond 8.

Cette poutre 15 est déformable, de manière élastique, d'une part en flexion suivant la direction longitudinale L, d'autre part en torsion, par rapport à ses parties extrêmes 62, 63 autour d'un axe parallèle à la direction transversale T.

La poutre 15 formant le verrou est en saillie par rapport à la face supérieure 11 de la paroi de fond 8, un congé de raccordement 64 étant prévu entre la face supérieure 11 et les parties extrêmes 62, 63 du verrou 15 afin de rigidifier la liaison verrou 15 / paroi de fond 8.

Par ailleurs, afin de consolider le verrou 15, les parties extrêmes 62, 63 sont inclinées par rapport au corps 61, en étant recourbées vers l'intérieur du socle 3 pour former avec le corps 61 un angle obtus. En outre, les parties extrêmes 62, 63 sont biseautées vers la paroi de fond 8.

Afin de permettre le flottement du corps de verrou 61 par rapport à la paroi de fond 8, et faciliter ainsi sa déformation, d'une part lors de l'encliquetage du mécanisme 4 et d'autre part, inversement, lors de sa séparation du socle 3, le socle 3 présente une découpe traversante 65 pratiquée dans la paroi de fond 8, qui forme un espace vide autour du corps de verrou 61.

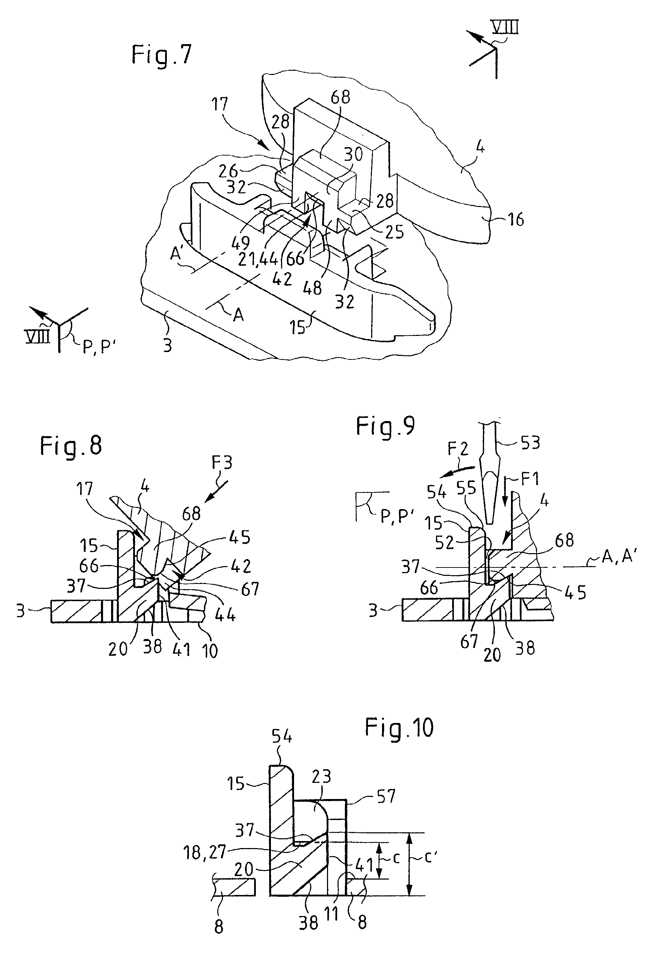

L'on décrit à présent une variante de réalisation, en référence aux figures 7 à 10. Bien entendu, les éléments communs aux modes de réalisation précédents sont référencés de manière identique.

Suivant cette variante, une partie au moins de la face supérieure 37 de la dent 20 est inclinée par rapport aux faces d'appui 27 des crans 22, 23, de sorte à former un angle aigu avec la face transversale 36 de l'encoche 24.

Par ailleurs, afin de conférer à la dent 20 une certaine flexibilité, sa face inférieure 38 est également inclinée pour être sensiblement parallèle à la face supérieure 37.

De la sorte, la dent 20 forme un ressort qui, en position encliquetée du mécanisme 4, sollicite la patte 17 de celui-ci vers l'opposé de la paroi de fond 8 pour plaquer les faces supérieures 28 des parties pleines 25, 26 contre les faces d'appui 27 des crans 22, 23 et ainsi rattraper les jeux entre la patte 17 et le verrou 15 suivant la direction d'élévation E en vue de rigidifier la fixation du mécanisme 4 sur le socle 3. La dent 20 supplée ainsi la languette 59 saillant de la paroi de fond 8.

La face inférieure 45 du creux 42 est, de manière complémentaire, au moins en partie inclinée par rapport aux faces supérieures 28 des parties pleines 25, 26 pour coopérer avec la face supérieure 37 de la 20.

Le montage du mécanisme 4 sur le socle 3 peut alors être réalisé de manière asymétrique, en insérant d'un côté l'une des pattes 17 dans le verrou 15 correspondant suivant une direction oblique matérialisée sur la figure 8 par la flèche F3, puis en faisant pivoter le mécanisme 4 en direction de la paroi de fond 8 et en encliquetant à force l'autre patte 17 dans l'autre verrou 15.

Afin de permettre l'engagement de la patte 17 du mécanisme 4 dans le verrou 15 suivant la direction oblique F3, le creux 42 présente d'une part un chanfrein 66 du côté de la face d'extrémité 30 de la patte 17, et d'autre part un méplat 67 séparant ce chanfrein 66 de la partie inclinée de la face inférieure 45 du creux 42, et qui vient glisser sur la face supérieure 37 de la dent 20 lors de l'introduction de la patte 17 dans le logement 19.

En outre, à des fins de rigidité, la patte 17 comporte une surépaisseur 68 au droit du creux 42 qu'elle surplombe. Cette surépaisseur 68 vient se loger dans l'encoche 24 du verrou 15 en position encliquetée du mécanisme 4, et forme un appui pour l'outil 53 lors de la séparation du mécanisme 4 du socle 3.

Selon le mode de réalisation illustré sur les figures 8 à 10, la face inférieure 38 de la dent 20 est inclinée pour former un angle avec la face supérieure 37 afin de conférer à la dent 20 une certaine résistance au cisaillement, son épaisseur en élévation au voisinage de la face transversale 36 de l'encoche 24 étant supérieure à son épaisseur en élévation au voisinage de sa face d'extrémité 41.

La hauteur totale c' de la dent 20 est ici sensiblement égale à la hauteur c du logement 19.

La hauteur totale c' de la dent 20 peut cependant être supérieure à la hauteur c du logement 19, tel qu'il apparaît sur la figure 10, la face supérieure 37 se trouvant, au moins en partie, au-delà des faces d'appui 27 des crans 22, 23, vers l'opposé de la paroi de fond 8, tandis que la face inférieure 45 du creux 42 se trouve au-delà des faces supérieures 28 des parties pleines 25, 26.

## Revendications

1. Ensemble comportant un mécanisme électrique (4) et un socle (3) comportant une paroi de fond (8) formant support du mécanisme (4), ledit mécanisme (4) étant apte à être maintenu par encliquetage sur ledit socle (3), ledit socle comportant des moyens d'encliquetage (14) comportant un verrou (15) élastiquement flexible qui comporte une portée d'appui (18) en regard de ladite paroi de fond (8), **caractérisé par** ladite portée (18) délimitant un logement (19) dans lequel est apte à être engagée une patte (17) dudit mécanisme (4), ledit verrou (15) comportant une dent en saillie, (20) étendue au moins partiellement dans ledit logement (19), et adaptée à être reçue dans un creux (42) ménagé dans ladite patte.

2. Ensemble selon la revendication 1, **caractérisé en ce que** ladite dent (20) s'étend, au moins en partie, entre ladite portée (18) et ladite paroi de fond (8).

3. Ensemble selon la revendication 1 ou 2, **caractérisé en ce que** ladite dent (20) présente une dimension d'élévation (c'), dite hauteur, dont la valeur est supérieure à celle d'une dimension d'élévation (c), dite hauteur, dudit logement (19).

4. Ensemble selon l'une des revendications 1 à 3, **caractérisé en ce que** ledit verrou (15) comporte deux crans de verrouillage (22, 23) espacés entre lesquels se trouve ladite dent (20), tandis que la patte (17) dudit mécanisme (4) comporte deux parties pleines (25, 26) espacées aptes à coopérer avec lesdits crans de verrouillage (22, 23) pour réaliser l'encliquetage du mécanisme (4), entre lesquelles se trouve un creux (42) complémentaire de ladite dent (20).

5. Ensemble selon la revendication 4, **caractérisé en ce que** lesdits crans (22, 23) présentent chacun une face d'appui (27), en regard de la paroi de fond (8), et contre laquelle est apte à venir en appui une face (28) dite supérieure prévue sur chacune desdites parties pleines (25, 26), lesdites faces d'appui (27) et lesdites faces supérieures (28) étant coplanaires deux à deux, lesdites faces d'appui (27) formant ensemble ladite portée d'appui (18), et **en ce que** ladite dent (20) présente une face (37), dite supérieure, tournée vers l'opposé desdites faces d'appui (27), tandis que ledit creux (42) présente une face (45), dite inférieure, tournée vers l'opposé desdites faces supérieures (28) et apte à venir en appui sur la face supérieure (37) de ladite dent (20) en position encliquetée du mécanisme (4).

6. Ensemble selon la revendication 5, **caractérisé en ce que** la face supérieure (37) de ladite dent (20) est parallèle aux faces d'appui (27) desdits crans (22, 23), tandis que la face inférieure (45) dudit creux (42) est parallèle aux faces supérieures (28) desdites parties pleines (25, 26).

7. Ensemble selon la revendication 5, **caractérisé en ce qu'**une partie au moins de la face supérieure (37) de ladite dent (20) est inclinée par rapport aux faces d'appui (27) desdits crans (22, 23), tandis que la face inférieure (45) dudit creux (42) est, au moins en partie, inclinée par rapport aux faces supérieures (28) desdites parties pleines (25, 26) pour coopérer avec la face supérieure (37) de ladite dent (20).

8. Ensemble selon la revendication 6 ou la revendication 7, **caractérisé en ce qu'**une partie au moins de la face supérieure (37) de ladite dent (20) se trouve au-delà des faces d'appui (27) desdits crans (22, 23), vers l'opposé de ladite paroi de fond (8), tandis qu'une partie au moins de la face inférieure (45) dudit creux (42) se trouve au-delà et en regard des faces supérieures (28) desdites parties pleines (25, 26).

9. Ensemble selon l'une des revendications 5 à 8, **caractérisé en ce que** ledit creux (42) présente, du côté d'une face d'extrémité libre (30) de la patte (17), un chanfrein (66) apte à permettre l'engagement de la patte (17) du mécanisme (4) dans le verrou (15) suivant une direction oblique.

10. Ensemble selon l'une des revendications 4 à 9, **caractérisé en ce qu'**il est prévu, sur le verrou (15), un espace vide (24') entre lesdits crans (22, 23) au droit de ladite dent (20), cet espace vide (24') débouchant du côté opposé à ladite paroi de fond (8).

11. Ensemble selon la revendication 10, **caractérisé en ce que** ladite dent (20) est centrée transversalement par rapport audit espace vide (24'), et présente une dimension transversale b' dont la valeur est inférieure à celle d'une dimension transversale b dudit espace vide (24'), tandis que la patte (17) dudit mécanisme (4) comporte deux cloisons (48, 49) encadrant ledit creux (42) et séparant celui-ci desdites parties pleines (25, 26), chaque cloison (48, 49) se trouvant, en position encliquetée du mécanisme (4), entre ladite dent (20) et l'un desdits crans (22, 23).

12. Ensemble selon la revendication 11, **caractérisé en ce que** chaque dite cloison (48, 49) est prolongée, du côté opposé audit creux (42), par une nervure (50, 51) de renfort de ladite patte (17).

13. Ensemble selon l'une des revendications 10 à 12, **caractérisé en ce qu'**il est prévu un interstice (52) entre ladite patte (17) et ledit verrou (15) en position encliquetée dudit mécanisme (4), cet interstice (52) débouchant du côté opposé à ladite paroi de fond (8) et formant, au travers dudit espace vide (24'), un passage accessible pour un outil (53) apte à écarter ledit verrou (15) de ladite patte (17) pour dégager celle-ci de ladite portée (18).

14. Ensemble selon la revendication 13, **caractérisé en ce que** ledit verrou (15) comporte un pion (54), en saillie suivant une direction dite d'élévation, qui borde ledit espace vide (24') pour former une surface d'appui (55) pour ledit outil (53).

15. Ensemble selon l'une des revendications 4 à 14, **caractérisé en ce que** chaque cran (22, 23) présente, du côté opposé à sa face d'appui (27), une surface courbe (31) sur laquelle est apte à appuyer et glisser, lors de l'encliquetage du mécanisme (4), un chanfrein (32) pratiqué dans chacune des parties pleines (25, 26) de ladite patte (17), en vue d'écarter le verrou (15) de la patte (17) pour permettre l'encliquetage du mécanisme (4) sur le socle (3).

16. Ensemble selon l'une des revendications précédentes, **caractérisé en ce que** ledit verrou (15) présente deux faces inclinées (58), contre lesquelles est apte à appuyer et glisser, lors de l'encliquetage du mécanisme (4), la patte (17) de celui-ci, ces faces inclinées (58) étant propres à assurer le guidage et le positionnement de la patte (17) par rapport au verrou (15), suivant la direction transversale.

17. Ensemble selon la revendication 16, **caractérisé en ce que** le verrou (15) présente, de part et d'autre de ladite portée (18), deux branches (56, 57) en saillie, chanfreinées du côté opposé à ladite paroi de fond (8) pour former lesdites faces inclinées.

18. Ensemble selon l'une des revendications précédentes, **caractérisé en ce que** le socle (3) comporte une languette flexible (59) saillant de la paroi de fond (8) en direction du verrou (15), sur laquelle est apte à venir en appui la patte (17) du mécanisme (4), cette languette (59) formant un ressort apte à solliciter la patte (17) pour l'éloigner de la paroi de fond (8).

19. Socle adapté à entrer dans la composition d'un ensemble (7) selon l'une des revendications 1 à 18, ledit socle (3) comportant une paroi de fond (8) formant support d'un mécanisme électrique (4) adapté à entrer dans la composition du même ensemble (7), ainsi que des moyens d'encliquetage (14) comportant un verrou (15) élastiquement déformable en flexion suivant une direction dite longitudinale, et qui comporte une portée d'appui (18) en regard de ladite paroi de fond (8), ladite portée (18) délimitant un logement (19) apte à recevoir une patte (17) dudit mécanisme (4), ledit verrou (15) comportant une dent (20) en saillie, étendue au moins partiellement dans ledit logement (19).

20. Socle selon la revendication 19, **caractérisé en ce que** ladite dent (20) se trouve entre ladite portée (18) et ladite paroi de fond (8).

21. Socle selon la revendication 19 ou 20, **caractérisé en ce que** ladite dent (20) présente une dimension d'élévation (c'), dite hauteur, dont la valeur est supérieure à celle d'une dimension d'élévation (c), dite hauteur, dudit logement (19).

22. Socle selon l'une des revendications 19 à 21, **caractérisé en ce que** ledit verrou (15) comporte deux crans (22, 23) de verrouillage espacés entre lesquels se trouve ladite dent (20).

23. Socle selon la revendication 22, **caractérisé en ce que**, lesdits crans (22, 23) présentent chacun une face d'appui (27) en regard de la paroi de fond (8), lesdites faces d'appui (27) étant coplanaires et formant ensemble ladite portée d'appui (18), et **en ce que** ladite dent (20) présente une face (37), dite supérieure, tournée vers l'opposé desdites faces d'appui (27).

24. Socle selon la revendication 23, **caractérisé en ce que** la face supérieure (37) de ladite dent (20) est parallèle aux faces d'appui (27) desdits crans (22, 23).

25. Socle selon la revendication 23, **caractérisé en ce qu'**une partie au moins de ladite face supérieure (37) de ladite dent (20) est inclinée par rapport aux faces d'appui (27) desdits crans (22, 23).

26. Socle selon la revendication 24 ou 25, **caractérisé en ce qu'**une partie au moins de ladite face supérieure (37) se trouve au-delà des faces d'appui (27) desdits crans (22, 23), vers l'opposé de ladite paroi de fond (8).

27. Socle selon l'une des revendications 23 à 26, **caractérisé en ce que** chaque cran (22, 23) présente, du côté opposé à sa face d'appui (27), une surface courbe (31).

28. Socle selon l'une des revendications 22 à 27, **caractérisé en ce qu'**il est prévu, sur le verrou (15), un espace vide (24') entre lesdits crans (22, 23) au droit de ladite dent (20), cet espace vide débouchant du côté opposé à ladite paroi de fond (8).

29. Socle selon la revendication 28, **caractérisé en ce que** ladite dent (20) est centrée transversalement par rapport audit espace vide (24'), et présente une dimension transversale (b') dont la valeur est inférieure à celle d'une dimension transversale (b) dudit espace vide (24').

30. Socle selon la revendication 28 ou 29, **caractérisé en ce que** ledit verrou (15) comporte un pion (54), en saillie suivant une direction dite d'élévation, bordant ledit espace vide (24').

31. Socle selon la revendication 23 à 30, **caractérisé en ce que** le verrou (15) présente, de part et d'autre de ladite portée (18), deux branches (56, 57) en saillie, chanfreinées du côté opposé à ladite paroi de fond (8).

32. Socle selon l'une des revendications 19 à 31, **caractérisé en ce qu'**il comprend une languette (59) élastiquement flexible, saillant de la paroi de fond (8) en direction dudit verrou (15), ladite languette (59) présentant une face (60), dite supérieure qui, en l'absence de sollicitation, est inclinée par rapport à ladite paroi de fond (8).

33. Socle selon l'une des revendications 19 à 32, **caractérisé en ce que** ledit verrou (15) se présente sous la forme d'une poutre, étendue suivant une direction dite transversale perpendiculaire à la direction longitudinale, et qui comporte un corps (61) flottant par rapport à ladite paroi de fond (8), ledit corps (61) portant ladite portée (18) et étant terminé par deux parties extrêmes (62, 63) rigidement ancrées dans la paroi de fond (8).

34. Socle selon la revendication 33, **caractérisé en ce que** ladite poutre (15) est déformable, de manière élastique, en flexion suivant la direction longitudinale, et en torsion autour d'un axe parallèle à la direction transversale.

35. Socle selon la revendication 33 ou 34, **caractérisé en ce que** le verrou (15) est en saillie par rapport à la paroi de fond (8), et **en ce que** le socle (3) présente un congé de raccordement (64) entre ladite paroi de fond (8) et lesdites parties extrêmes (62, 63) du verrou (15).

36. Socle selon la revendication 35, **caractérisé en ce que** lesdites parties extrêmes (62, 63) sont inclinées par rapport au corps de verrou (61), en étant recourbées du côté du verrou (15) où se trouve la portée (18).

37. Socle selon la revendication 36, **caractérisé en ce que** lesdites parties extrêmes (62, 63) sont biseautées vers la paroi de fond (8).

38. Socle selon l'une des revendications 19 à 37, **caractérisé en ce que** ledit socle (3) présente une découpe (65) pratiquée dans la paroi de fond (8), formant un espace vide autour dudit corps de verrou (61).

39. Mécanisme électrique adapté à entrer dans la composition d'un ensemble (7) selon l'une des revendications 1 à 18, apte a être maintenu par encliquetage sur un socle (3) adapté à entrer dans la composition du même ensemble (7), ledit mécanisme (4) comportant à cet effet une patte (17) en saillie, apte à coopérer avec des moyens d'encliquetage (14) appartenant audit socle (3), ladite patte (17) comprenant deux parties pleines (25, 26) espacées, séparés par un creux (42) ménagé dans la patte (17).

40. Mécanisme selon la revendication 39, **caractérisé en ce que** chaque partie pleine (25, 26) présente une face (28), dite supérieure, lesdites faces supérieures (28) étant coplanaires, et **en ce que** ledit creux (42) présente une face (45), dite inférieure, tournée vers l'opposé desdites faces supérieures (28).

41. Mécanisme selon la revendication 40, **caractérisé en ce que** la face inférieure (45) dudit creux (42) est parallèle aux faces supérieures (28) desdites parties pleines (25, 26).

42. Mécanisme selon la revendication 40, **caractérisé en ce qu'**une partie au moins de la face inférieure (45) dudit creux (42) est inclinée par rapport aux faces supérieures (28) desdites parties pleines (25, 26).

43. Mécanisme selon la revendication 41 ou 42, **caractérisé en ce qu'**une partie au moins de la face inférieure (45) dudit creux (42) se trouve au-delà et en regard des faces supérieures (28) desdites parties pleines (25, 26).

44. Mécanisme selon l'une des revendications 40 à 43, **caractérisé en ce que** ledit creux (42) est chanfreiné du côté d'une face d'extrémité libre (30) de la patte (17).

45. Mécanisme selon l'une des revendications 39 à 44, **caractérisé en ce que** ladite patte (17) comporte deux cloisons (48, 49) encadrant ledit creux (42) et séparant celle-ci desdites parties pleines (25, 26).

46. Mécanisme selon la revendication 45, **caractérisé en ce que** chaque cloison (48, 49) est prolongée, du côté opposé audit creux (42), par une nervure (50, 51) de renfort de ladite patte (17).

47. Mécanisme selon l'une des revendications 39 à 46, **caractérisé en ce que** chaque partie pleine (25, 26) est chanfreiné du côté d'une face d'extrémité libre (30) de ladite patte (17).

48. Appareil électrique du type comportant un socle (3) pour sa fixation à une paroi (2), un mécanisme électrique (4) apte à être encliqueté sur le socle (3) qui forme un support dudit mécanisme (4), ainsi qu'une coiffe (6) apte à recouvrir le socle (3) et le mécanisme (4) pour former une façade d'utilisation de l'appareil (1), ledit socle (3) et ledit mécanisme (4) formant un ensemble selon l'une des revendications 1 à 18.

## Patentansprüche

1. Anordnung mit einem elektrischen Mechanismus (4) und einem Sockel (3), der eine Rückwand (8) aufweist, welche einen Träger für den Mechanismus (4) bildet, wobei der Mechanismus (4) am Sockel (3) durch Einrasten gehalten zu werden vermag, wobei der Sockel Rastmittel (14) mit einem elastisch biegbaren Riegel (15) aufweist, der der Rückwand (8) gegenüber eine Auflagefläche (18) aufweist, **dadurch gekennzeichnet, dass** die Auflagefläche (18) eine Aufnahme (19) umgrenzt, in der ein Arm (17) des Mechanismus (4) eingeführt zu werden vermag, wobei der Riegel (15) einen vorspringenden Zahn (20) umfasst, der sich wenigstens zum Teil in der Aufnahme (19) erstreckt und in einer in dem Arm ausgebildeten Höhlung (42) aufgenommen zu werden vermag.

2. Anordnung nach Anspruch 1,
**dadurch gekennzeichnet, dass** sich der Zahn (20) wenigstens zum Teil zwischen der Auflagefläche (18) und der Rückwand (8) erstreckt.

3. Anordnung nach Anspruch 1 oder 2,
**dadurch gekennzeichnet, dass** der Zahn (20) ein als Höhe bezeichnetes Höhenmaß (c') aufweist, dessen Wert größer ist als ein als Höhe bezeichnetes Höhenmaß (c) der Aufnahme (19).

4. Anordnung nach einem der Ansprüche 1 bis 3,
**dadurch gekennzeichnet, dass** der Riegel (15) zwei voneinander beabstandete Verriegelungsrasten (22, 23) umfasst, zwischen denen sich der Zahn (20) befindet, wobei der Arm (17) des Mechanismus (4) zwei voneinander beabstandete massive Teile (25, 26) aufweist, die mit den Verriegelungsrasten (22, 23) zusammenzuwirken vermögen, um den Mechanismus (4) einrasten zu lassen, und zwischen denen sich eine zu dem Zahn (20) komplementäre Höhlung (42) befindet.

5. Anordnung nach Anspruch 4,
**dadurch gekennzeichnet, dass** die Rasten (22, 23) der Rückwand (8) gegenüber jeweils eine Anlagefläche (27) aufweisen, gegen die eine als Oberseite bezeichnete Fläche (28), die an jedem der massiven Teile (25, 26) vorgesehen ist, in Anlage zu gelangen vermag, wobei die Anlageflächen (27) und die Oberseiten (28) paarweise komplanar sind, wobei die Anlageflächen (27) zusammen die Auflagefläche (18) bilden, und dass der Zahn (20) eine als Oberseite bezeichnete Fläche (37) aufweist, die der den Anlageflächen (27) entgegengesetzten Seite zugewandt ist, während die Höhlung (42) eine als Unterseite bezeichnete Fläche (45) aufweist, die der den Oberseiten (28) entgegengesetzten Seite zugewandt ist und in der Raststellung des Mechanismus (4) an der Oberseite (37) des Zahns (20) in Anlage zu gelangen vermag.

6. Anordnung nach Anspruch 5,
**dadurch gekennzeichnet, dass** die Oberseite (37) des Zahns (20) zu den Anlageflächen (27) der Rasten (22, 23) parallel ist, während die Unterseite (45) der Höhlung (42) zu den Oberseiten (28) der massiven Teile (25, 26) parallel ist.

7. Anordnung nach Anspruch 5,
**dadurch gekennzeichnet, dass** wenigstens ein Teil der Oberseite (37) des Zahns (20) bezüglich der Anlageflächen (27) der Rasten (22, 23) geneigt ist, während die Unterseite (45) der Höhlung (42) bezüglich der Oberseiten (28) der massiven Teile (25, 26) wenigstens zum Teil geneigt ist, um mit der Oberseite (37) des Zahns (20) zusammenzuwirken.

8. Anordnung nach Anspruch 6 oder Anspruch 7,
**dadurch gekennzeichnet, dass** sich wenigstens ein Teil der Oberseite (37) des Zahns (20) jenseits der Anlageflächen (27) der Rasten (22, 23) auf der der Rückwand (8) abgewandten Seite befindet, während sich wenigstens ein Teil der Unterseite (45) der Höhlung (42) jenseits der Oberseiten (28) der massiven Teile (25, 26) und diesen gegenüber befindet.

9. Anordnung nach einem der Ansprüche 5 bis 8,
**dadurch gekennzeichnet, dass** die Höhlung (42) an der Seite einer freien Endfläche (30) des Arms (17) eine Schräge (66) aufweist, die das Einführen des Arms (17) des Mechanismus (4) in den Riegel (15) in einer schrägen Richtung zu ermöglichen vermag.

10. Anordnung nach einem der Ansprüche 4 bis 9,
**dadurch gekennzeichnet, dass** auf dem Riegel (15) rechtwinklig zum Zahn (20) eine Lücke (24') zwischen den Rasten (22, 23) vorgesehen ist, wobei die Lücke (24') an der der Rückwand (8) abgewandten Seite mündet.

11. Anordnung nach Anspruch 10,
**dadurch gekennzeichnet, dass** der Zahn (20) bezüglich der Lücke (24') in Querrichtung zentriert ist und ein Quermaß (b') aufweist, dessen Wert kleiner ist als der eines Quermaßes (b) der Lücke (24'), während der Arm (17) des Mechanismus (4) zwei Trennwände (48, 49) aufweist, die die Höhlung (42) umgeben und diese von den massiven Teilen (25, 26) trennen, wobei sich jede Trennwand (48, 49) in der Raststellung des Mechanismus (4) zwischen dem Zahn (20) und einer der Rasten (22, 23) befindet.

12. Anordnung nach Anspruch 11,
**dadurch gekennzeichnet, dass** jede Trennwand (48, 49) auf der der Höhlung (42) abgewandten Seite durch eine den Arm (17) verstärkende Rippe (50, 51) verlängert ist.

13. Anordnung nach einem der Ansprüche 10 bis 12,
**dadurch gekennzeichnet, dass** zwischen dem Arm (17) und dem Riegel (15) in der Raststellung des Mechanismus (4) ein Spalt (52) vorgesehen ist, der an der der Rückwand (8) abgewandten Seite mündet und mithilfe der Lücke (24') einen für ein Werkzeug (53) zugänglichen Durchlass bildet, das den Riegel (15) von dem Arm (17) abzurücken vermag, um diesen von der Auflagefläche (18) zu lösen.

14. Anordnung nach Anspruch 13,
**dadurch gekennzeichnet, dass** der Riegel (15) einen in die Höhe ragenden Stift (54) umfasst, der die Lücke (24') umschließt, um für das Werkzeug (53) eine Anlagefläche (55) zu bilden.

15. Anordnung nach einem der Ansprüche 4 bis 14,
**dadurch gekennzeichnet, dass** jede Raste (22, 23) auf der ihrer Anlagefläche (27) abgewandten Seite eine gebogene Fläche (31) aufweist, auf der eine Schräge (32) aufzuliegen und beim Einrasten des Mechanismus (4) zu gleiten vermag, die in jedem der massiven Teile (25, 26) des Arms (17) zum Abrücken des Riegels (15) von dem Arm (17) ausgebildet ist, um das Einrasten des Mechanismus (4) auf dem Sockel (3) zu ermöglichen.

16. Anordnung nach einem der vorhergehenden Ansprüche,
**dadurch gekennzeichnet, dass** der Riegel (15) zwei schräge Flächen (58) aufweist, auf denen der Arm (17) des Mechanismus (4) bei dessen Einrasten aufzuliegen und zu gleiten vermag, wobei die schrägen Flächen (58) das Führen und Positionieren des Arms (17) bezüglich des Riegels (15) in Querrichtung zu gewährleisten vermögen.

17. Anordnung nach Anspruch 16,
**dadurch gekennzeichnet, dass** der Riegel (15) beidseits der Auflagefläche (18) zwei vorspringende Schenkel (56, 57) aufweist, die auf der der Rückwand (8) abgewandten Seite abgeschrägt sind, um die schrägen Flächen zu bilden.

18. Anordnung nach einem der vorhergehenden Ansprüche,
**dadurch gekennzeichnet, dass** der Sockel (3) eine an der Rückwand (8) in Richtung des Riegels (15) vorstehende flexible Zunge (59) umfasst, an der der Arm (17) des Mechanismus (4) in Anlage zu gelangen vermag, wobei die Zunge (59) eine Feder bildet, die den Arm (17) zu beanspruchen vermag, um diesen von der Rückwand (8) abzurücken.

19. Sockel, der Bestandteil einer Anordnung (7) nach einem der Ansprüche 1 bis 18 zu sein vermag, wobei der Sockel (3) eine Rückwand (8) umfasst, die einen Träger für einen elektrischen Mechanismus (4) bildet, der Bestandteil derselben Anordnung (7) zu sein vermag, sowie Rastmittel (14), die einen in einer Längsrichtung elastisch biegeverformbaren Riegel (15) umfassen, der der Rückwand gegenüberliegend eine Auflagefläche (18) aufweist, wobei die Auflagefläche (18) eine Aufnahme (19) umgrenzet, die einen Arm (17) des Mechanismus (4) aufzunehmen vermag, wobei der Riegel (15) einen sich wenigstens zum Teil in der Aufnahme (19) erstreckenden, vorspringenden Zahn (20) umfasst.

20. Sockel nach Anspruch 19,
**dadurch gekennzeichnet, dass** sich der Zahn (20) zwischen der Auflagefläche (18) und der Rückwand (8) befindet.

21. Sockel nach Anspruch 19 oder 20,
**dadurch gekennzeichnet, dass** der Zahn (20) ein als Höhe bezeichnetes Höhenmaß (c') aufweist, dessen Wert größer ist als ein als Höhe bezeichnetes Höhenmaß (c) der Aufnahme (19).

22. Sockel nach einem der Ansprüche 19 bis 21,
**dadurch gekennzeichnet, dass** der Riegel (15) zwei voneinander beabstandete Verriegelungsrasten (22, 23) umfasst, zwischen denen sich der Zahn (20) befindet.

23. Sockel nach Anspruch 22,
**dadurch gekennzeichnet, dass** die Rasten (22, 23) der Rückwand (8) gegenüber jeweils eine Anlagefläche (27) aufweisen, wobei die Anlageflächen (27) komplanar sind und zusammen die Auflagefläche (18) bilden, und dass der Zahn (20) eine als Oberseite bezeichnete Fläche (37) aufweist, die der den Anlageflächen (27) entgegengesetzten Seite zugewandt ist.

24. Sockel nach Anspruch 23,
**dadurch gekennzeichnet, dass** die Oberseite (37) des Zahns (20) zu den Anlageflächen (27) der Rasten (22, 23) parallel ist.

25. Sockel nach Anspruch 23,
**dadurch gekennzeichnet, dass** wenigstens ein Teil der Oberseite (37) des Zahns (20) bezüglich der Anlageflächen (27) der Rasten (22, 23) geneigt ist.

26. Sockel nach Anspruch 24 oder 25,
**dadurch gekennzeichnet, dass** sich wenigstens ein Teil der Oberseite (37) jenseits der Anlageflächen (27) der Rasten (22, 23) auf der der Rückwand (8) abgewandten Seite befindet.

27. Sockel nach einem der Ansprüche 23 bis 26,
**dadurch gekennzeichnet, dass** jede Raste (22, 23) auf der ihrer Anlagefläche (27) abgewandten Seite eine gebogene Fläche (31) aufweist.

28. Sockel nach einem der Ansprüche 22 bis 27,
**dadurch gekennzeichnet, dass** auf dem Riegel (15) rechtwinklig zu dem Zahn (20) eine Lücke (24') zwischen den Rasten (22, 23) vorgesehen ist, wobei die Lücke (24') an der der Rückwand (8) abgewandten Seite mündet.

29. Sockel nach Anspruch 28,
**dadurch gekennzeichnet, dass** der Zahn (20) bezüglich der Lücke (24') in Querrichtung zentriert ist und ein Quermaß (b') aufweist, dessen Wert kleiner ist als der eines Quermaßes (b) der Lücke (24').

30. Sockel nach Anspruch 28 oder 29,
**dadurch gekennzeichnet, dass** der Riegel (15) einen in die Höhe ragenden Stift (54) umfasst, der die Lücke (24') umschließt.

31. Sockel nach einem der Ansprüche 23 bis 30,
**dadurch gekennzeichnet, dass** der Riegel (15) beidseits der Auflagefläche (18) zwei vorspringende Schenkel (56, 57) aufweist, die auf der der Rückwand (8) abgewandten Seite abgeschrägt sind.

32. Sockel nach einem der Ansprüche 19 bis 31,
**dadurch gekennzeichnet, dass** er eine an der Rückwand (8) in Richtung des Riegels (15) vorstehende flexible Zunge (59) umfasst, die eine als Oberseite bezeichnete Fläche (60) aufweist, die bei fehlender Beanspruchung bezüglich der Rückwand (8) geneigt ist.

33. Sockel nach einem der Ansprüche 19 bis 32,
**dadurch gekennzeichnet, dass** der Riegel (15) die Form eines Trägers hat, der sich in einer lotrecht zur Längsrichtung verlaufenden Querrichtung erstreckt und der einen bezüglich der Rückwand (8) schwimmenden Körper (61) aufweist, wobei der Körper (61) die Auflagefläche (18) trägt und in zwei Endstücken (62, 63) endet, die in der Rückwand (8) starr verankert sind.

34. Sockel nach Anspruch 33,
**dadurch gekennzeichnet, dass** der Träger (15) in Längsrichtung elastisch biegeverformbar und um eine zur Querrichtung parallele Achse elastisch verdrehverformbar ist.

35. Sockel nach Anspruch 33 oder 34,
**dadurch gekennzeichnet, dass** der Riegel (15) bezüglich der Rückwand (8) vorsteht und dass der Sockel (3) zwischen der Rückwand (8) und den Endstücken (62, 63) des Riegels (15) eine Auskehlung (64) aufweist.

36. Sockel nach Anspruch 35,
**dadurch gekennzeichnet, dass** die Endstücke (62, 63) bezüglich des Riegelkörpers (61) geneigt sind, wobei sie an der Seite des Riegels (15), an der sich die Auflagefläche (18) befindet, gekrümmt sind.

37. Sockel nach Anspruch 36,
**dadurch gekennzeichnet, dass** die Endstücke (62, 63) in Richtung der Rückwand (8) abgeschrägt sind.

38. Sockel nach einem der Ansprüche 19 bis 37,
**dadurch gekennzeichnet, dass** der Sockel (3) einen in der Rückwand (8) ausgebildeten Einschnitt (65) aufweist, der um den Riegelkörper (61) herum eine Lücke bildet.

39. Elektrischer Mechanismus, der Bestandteil einer Anordnung (7) nach einem der Ansprüche 1 bis 18 zu sein vermag, der durch Einrasten auf einem Sockel (3) gehalten zu werden vermag, welcher Bestandteil derselben Anordnung (7) zu sein vermag, wobei der Mechanismus (4) hierzu einen vorspringenden Arm (17) aufweist, der mit zum Sockel (3) gehörenden Einrastmitteln (14) zusammenzuwirken vermag, wobei der Arm (17) zwei voneinander beabstandete massive Teile (25, 26) umfasst, die durch eine in dem Arm (17) ausgebildete Höhlung (42) voneinander getrennt sind.

40. Mechanismus nach Anspruch 39,
**dadurch gekennzeichnet, dass** jedes massive Teil (25, 26) eine als Oberseite bezeichnete Fläche (28) aufweist, wobei die Oberseiten (28) komplanar sind, und dass die Höhlung (42) eine als Unterseite bezeichnete Fläche (45) aufweist, welche der den Oberseiten (28) entgegengesetzten Seite zugewandt ist.

41. Mechanismus nach Anspruch 40,
**dadurch gekennzeichnet, dass** die Unterseite (45) der Höhlung (42) zu den Oberseiten (28) der massiven Teile (25, 26) parallel ist.

42. Mechanismus nach Anspruch 40,
**dadurch gekennzeichnet, dass** wenigstens ein Teil der Unterseite (45) der Höhlung (42) bezüglich der Oberseiten (28) der massiven Teile (25, 26) geneigt ist.

43. Mechanismus nach Anspruch 41 oder 42,
**dadurch gekennzeichnet, dass** sich wenigstens ein Teil der Unterseite (45) der Höhlung (42) jenseits der Oberseiten (28) der massiven Teile (25, 26) und diesen gegenüber befindet.

44. Mechanismus nach einem der Ansprüche 40 bis 43,
**dadurch gekennzeichnet, dass** die Höhlung (42) an der Seite einer freien Endfläche (30) des Arms (17) abgeschrägt ist.

45. Mechanismus nach einem der Ansprüche 39 bis 44,
**dadurch gekennzeichnet, dass** der Arm (17) zwei Trennwände (48, 49) aufweist, die die Höhlung (42) umgeben und diese von den massiven Teilen (25, 26) trennen.

46. Mechanismus nach Anspruch 45,
**dadurch gekennzeichnet, dass** jede Trennwand (48, 49) auf der der Höhlung (42) abgewandten Seite durch eine den Arm (17) verstärkende Rippe (50, 51) verlängert ist.

47. Mechanismus nach einem der Ansprüche 39 bis 46,
**dadurch gekennzeichnet, dass** jedes massive Teil (25, 26) an der Seite einer freien Endfläche (30) des Arms (17) abgeschrägt ist.

48. Elektrisches I nstallationsgerät des Typs mit einem Sockel (3) zu seiner Befestigung an einer Wand (2), einem elektrischen Mechanismus (4), der auf dem Sockel (3), der einen Träger für den Mechanismus (4) bildet, einrastbar ist, sowie einer Abdeckung (6), die den Sockel (3) und den Mechanismus (4) zu verdecken vermag, um eine Frontblende zur Benutzung des Geräts (1) zu bilden, wobei der Sockel (3) und der Mechanismus (4) eine Anordnung nach einem der Ansprüche 1 bis 18 bilden.

## Claims

1. Assembly comprising an electrical mechanism (4) and a base (3) comprising a bottom wall (8) supporting the mechanism (4), said mechanism (4) being capable of being held on said base (3) by means of snap-on engagement, said base comprising snap-on engagement means (14) comprising a resiliently flexible lock (15) which comprises a supporting bearing surface (18) opposing said bottom wall (8), **characterised in that** said bearing surface (18) delimits a recess (19) in which a tab (17) of said mechanism (4) can engage, said lock (15) comprising a projecting tooth (20) extending at least in part into said recess (19) and capable of being received in a cavity (42) formed in said tab.

2. Assembly according to claim 1, **characterised in that** said tooth (20) extends, at least in part, between said bearing surface (18) and said bottom wall (8).

3. Assembly according to either claim 1 or claim 2, **characterised in that** said tooth (20) has an elevation dimension (c') or height which is greater than an elevation dimension (c) or height of said recess (19).

4. Assembly according to any of claims 1 to 3, **characterised in that** said lock (15) comprises two spaced-apart locking notches (22, 23) between which said tooth (20) is located, whilst the tab (17) of said mechanism (4) comprises two spaced-apart solid parts (25, 26) capable of cooperating with said locking notches (22, 23) in order to snap on the mechanism (4), between which solid parts a cavity (42) which complements said tooth (20) is located.

5. Assembly according to claim 4, **characterised in that** said notches (22, 23) each have a support face (27) opposing the bottom wall (8) and against which a face (28), designated an upper face, provided on each of said solid parts (25, 26) can rest, said support faces (27) and said upper faces (28) being coplanar in pairs, said support faces (27) together forming said bearing surface (18), and **in that** said tooth (20) has a face (37), designated an upper face, facing in the opposite direction from said support faces (27), whilst said cavity (42) has a face (45), designated a lower face, facing in the opposite direction from said upper faces (28) and capable of resting against the upper face (37) of said tooth (20) in the snapped-on position of the mechanism (4).

6. Assembly according to claim 5, **characterised in that** the upper face (37) of said tooth (20) is parallel to the support faces (27) of said notches (22, 23), whilst the lower face (45) of said cavity (42) is parallel to the upper faces (28) of said solid parts (25, 26).

7. Assembly according to claim 5, **characterised in that** at least part of the upper face (37) of said tooth (20) is inclined relative to the support faces (27) of said notches (22, 23), whilst the lower face (45) of said cavity (42) is, at least in part, inclined relative to the upper faces (28) of said solid parts (25, 26) in order to cooperate with the upper face (37) of said tooth (20).

8. Assembly according to either claim 6 or claim 7, **characterised in that** at least part of the upper face (37) of said tooth (20) is located above the support faces (27) of said notches (22, 23) facing in the opposite direction from said bottom wall (8), whilst at least part of the lower face (45) of said cavity (42) is located beyond and opposing the upper faces (28) of said solid parts (25, 26).

9. Assembly according to any of claims 5 to 8, **characterised in that** said cavity (42) has, on the side of a free end face (30) of the tab (17), a chamfer (66) capable of allowing the tab (17) of the mechanism (4) to engage in the lock (15) in an oblique direction.

10. Assembly according to any of claims 4 to 9, **characterised in that** an empty space (24') between said notches (22, 23) in line with said tooth (20) is provided on the lock (15), which empty space (24') opens on the side opposite said bottom wall (8).

11. Assembly according to claim 10, **characterised in that** said tooth (20) is centred transversely relative to said empty space (24') and has a transverse dimension b' which is smaller than a transverse dimension b of said empty space (24'), whilst the tab (17) of said mechanism (4) comprises two partitions (48, 49) enclosing said cavity (42) and separating it from said solid parts (25, 26), each partition (48, 49) being located, in the snapped-on position of the mechanism (4), between said tooth (20) and one of said notches (22, 23).

12. Assembly according to claim 11, **characterised in that** each said partition (48, 49) is extended on the side opposite said cavity (42) by a reinforcement rib (50, 51) of said tab (17).

13. Assembly according to any of claims 10 to 12, **characterised in that** a gap (52) is provided between said tab (17) and said lock (15) in the snapped-on position of said mechanism (4), which gap (52) emanates from the side opposite said bottom wall (8) and forms an accessible passage across said empty space (24') for a tool (53) capable of disengaging said lock (15) from said tab (17) to release said tab from said bearing surface (18).

14. Assembly according to claim 13, **characterised in that** said lock (15) comprises a pin (54) projecting in a direction, designated an elevation direction, and running alongside said empty space (24') to form a support surface (55) for said tool (53).

15. Assembly according to any of claims 4 to 14, **characterised in that** each notch (22, 23) has, on the side opposite its support face (27), a curved surface (31) on which a chamfer (32) formed in each of the solid parts (25, 26) of said tab (17) can rest and slide while the mechanism (4) is being snapped on in order to disengage the lock (15) from the tab (17) to allow the mechanism (4) to be snapped onto the base (3).

16. Assembly according to any of the preceding claims, **characterised in that** said lock (15) has two inclined faces (58) against which, while the mechanism (4) is being snapped on, the tab (17) of said mechanism can rest and slide, these inclined faces (58) being suitable for allowing the tab (17) to be guided and positioned relative to the lock (15), in the transverse direction.

17. Assembly according to claim 16, **characterised in that** the lock (15) has, on either side of said bearing surface (18), two projecting arms (56, 57), chamfered on the side opposite said bottom wall (8) to form said inclined faces.

18. Assembly according to any of the preceding claims, **characterised in that** the base (3) comprises a flexible tongue (59) projecting from the bottom wall (8) towards the lock (15) on which the tab (17) of the mechanism (4) can rest, said tongue (59) forming a spring capable of urging the tab (17) in order to move said tab away from the bottom wall (8).

19. Base capable of forming part of an assembly (7) according to any of claims 1 to 18, said base (3) comprising a bottom wall (8) supporting an electrical mechanism (4) capable of forming part of the same assembly (7), and snap-on engagement means (14) comprising a lock (15) which is resiliently deformable by bending in a direction, designated a longitudinal direction, and which comprises a support bearing surface (18) opposing said bottom wall (8), said bearing surface (18) delimiting a recess (19) capable of receiving a tab (17) of said mechanism (4), said lock (15) comprising a projecting tooth (20) which extends at least in part into said recess (19).

20. Base according to claim 19, **characterised in that** said tooth (20) is located between said bearing surface (18) and said bottom wall (8).

21. Base according to either claim 19 or claim 20, **characterised in that** said tooth (20) has an elevation dimension (c') or height which is greater than an elevation dimension (c) or height of said recess (19).

22. Base according to any of claims 19 to 21, **characterised in that** said lock (15) comprises two spaced-apart locking notches (22, 23) between which said tooth (20) is located.

23. Base according to claim 22, **characterised in that** said notches (22, 23) each have a support face (27) opposing the bottom wall (8), said support faces (27) being coplanar and together forming said support bearing surface (18), and **in that** said tooth (20) has a face (37), designated an upper face, facing in the opposite direction from said support faces (27).

24. Base according to claim 23, **characterised in that** the upper face (37) of said tooth (20) is parallel to the support faces (27) of said notches (22, 23).

25. Base according to claim 23, **characterised in that** at least part of said upper face (37) of said tooth (20) is inclined relative to the support faces (27) of said notches (22, 23).

26. Base according to either claim 24 or claim 25, **characterised in that** at least part of said upper face (37) is located above the support faces (27) of said notches (22, 23), facing in the opposite direction from said bottom wall (8).

27. Base according to any of claims 23 to 26, **characterised in that** each notch (22, 23) has a curved surface (31) on the side opposite its support face (27).

28. Base according to any of claims 22 to 27, **characterised in that** an empty space (24') between said notches (22, 23) in line with said tooth (20) is provided on the lock (15), which empty space opens on the side opposite said bottom wall (8).

29. Base according to claim 28, **characterised in that** said tooth (20) is centred transversely relative to said empty space (24') and has a transverse dimension (b') which is smaller than a transverse dimension (b) of said empty space (24').

30. Base according to either claim 28 or claim 29, **characterised in that** said lock (15) comprises a pin (54) projecting in a direction, designated an elevation direction, and running alongside said empty space (24').

31. Base according to claims 23 to 30, **characterised in that** the lock (15) has, on either side of said bearing surface (18), two projecting arms (56, 57), chamfered on the side opposite said bottom wall (8).

32. Base according to any of claims 19 to 31, **characterised in that** it comprises a resiliently flexible tongue (59) projecting from the bottom wall (8) towards the lock (15), said tongue (59) having a face (60), designated an upper face, which, in the absence of loading, is inclined relative to said bottom wall (8).

33. Base according to any of claims 19 to 32, **characterised in that** said lock (15) is in the form of a beam, extending in a direction, designated a transverse direction, perpendicular to the longitudinal direction, and comprises a member (61) which floats relative to said bottom wall (8), said member (61) carrying said bearing surface (18) and ending in two end parts (62, 63) which are rigidly anchored in the bottom wall (8).

34. Base according to claim 33, **characterised in that** said beam (15) can be deformed in a resilient manner by bending in the longitudinal direction and by torsion about an axis parallel to the transverse direction.

35. Base according to either claim 33 or claim 34, **characterised in that** the lock (15) projects relative to the bottom wall (8), and **in that** the base (3) has a fillet (64) between said bottom wall (8) and said end parts (62, 63) of the lock (15).

36. Base according to claim 35, **characterised in that** said end parts (62, 63) are inclined relative to the lock member (61), by being curved on the side of the lock (15) where the bearing surface (18) is located.

37. Base according to claim 36, **characterised in that** said end parts (62, 63) are bevelled towards the bottom wall (8).

38. Base according to any of claims 19 to 37, **characterised in that** said base (3) has a cutout (65) made in the bottom wall (8), which cutout forms an empty space around said lock member (61).

39. Electrical mechanism capable of forming part of an assembly (7) according to any of claims 1 to 18, able to be held by being snapped onto a base (3) capable of forming part of the same assembly (7), said mechanism (4) comprising for this purpose a projecting tab (17) able to cooperate with snap-on engagement means (14) belonging to said base (3), said tab (17) comprising two solid parts (25, 26) which are spaced apart and separated by a cavity (42) formed in the tab (17).

40. Mechanism according to claim 39, **characterised in that** each solid part (25, 26) has a face (28), designated an upper face, said upper faces (28) being coplanar, and **in that** said cavity (42) has a face (45), designated a lower face, facing in the opposite direction from said upper faces (28).

41. Mechanism according to claim 40, **characterised in that** the lower face (45) of said cavity (42) is parallel to the upper faces (28) of said solid parts (25, 26).

42. Mechanism according to claim 40, **characterised in that** at least part of the lower face (45) of said cavity (42) is inclined relative to the upper faces (28) of said solid parts (25, 26).

43. Mechanism according to either claim 41 or claim 42, **characterised in that** at least part of the lower face (45) of said cavity (42) is located beyond and opposing the upper faces (28) of said solid parts (25, 26).

44. Mechanism according to any of claims 40 to 43, **characterised in that** said cavity (42) is chamfered on the side of a free end face (30) of the tab (17).

45. Mechanism according to any of claims 39 to 44, **characterised in that** said tab (17) comprises two partitions (48, 49) enclosing said cavity (42) and separating it from said solid parts (25, 26).

46. Mechanism according to claim 45, **characterised in that** each partition (48, 49) is extended on the side opposite said cavity (42) by a reinforcement rib (50, 51) of said tab (17).

47. Mechanism according to any of claims 39 to 46, **characterised in that** each solid part (25, 26) is chamfered on the side of a free end face (30) of said tab (17).

48. Electrical device of the type comprising a base (3) for fixing said device to a wall (2), an electrical mechanism (4) capable of being snapped onto to the base (3) which forms a support for said mechanism (4), and a cap (6) capable of covering the base (3) and the mechanism (4) to form a usage cover for the device (1), said base (3) and said mechanism (4) forming an assembly according to any of claims 1 to 18.
